Europäisches Patentamt

European Patent Office

Office européen des brevets

(19)

(11) **EP 0 925 140 B1**

(12) **EUROPÄISCHE PATENTSCHRIFT**

(45) Veröffentlichungstag und Bekanntmachung des Hinweises auf die Patenterteilung:
**27.08.2003   Patentblatt 2003/35**

(21) Anmeldenummer: 97923829.2

(22) Anmeldetag: **14.05.1997**

(51) Int Cl.⁷: $B23K\ 26/00$, $B23K\ 15/00$

(86) Internationale Anmeldenummer:
**PCT/DE97/00994**

(87) Internationale Veröffentlichungsnummer:
**WO 98/010884 (19.03.1998 Gazette 1998/11)**

(54) **VERFAHREN ZUM STRAHLSCHWEISSEN VON HÄRTBAREN STÄHLEN MITTELS KURZZEITWÄRMEBEHANDLUNG**

METHOD FOR BEAM WELDING OF HARDENABLE STEELS BY MEANS OF SHORT-TIME HEAT TREATMENT

PROCEDE DE SOUDAGE PAR FAISCEAU D'ACIERS TREMPES PAR TRAITEMENT THERMIQUE DE COURTE DUREE

(84) Benannte Vertragsstaaten:
**CH FR GB IT LI SE**

(30) Priorität: **13.09.1996   DE 19637465**

(43) Veröffentlichungstag der Anmeldung:
**30.06.1999   Patentblatt 1999/26**

(73) Patentinhaber:
  • **FRAUNHOFER-GESELLSCHAFT ZUR FÖRDERUNG DER ANGEWANDTEN FORSCHUNG E.V.**
    **80636 München (DE)**
  • **KARL H. ARNOLD MASCHINENFABRIK GMBH & CO. KG**
    **88214 Ravensburg (DE)**

(72) Erfinder:
  • **BRENNER, Berndt**
    **D-01474 Pappritz (DE)**
  • **GNANN, Rüdiger, Arnold**
    **D-88214 Ravensburg (DE)**
  • **NAUNAPPER, Dietmar**
    **D-79206 Oberrimsingen (DE)**
  • **DUSCHEK, Carsten**
    **D-01157 Dresden (DE)**

(56) Entgegenhaltungen:
  **EP-A- 0 721 818          DE-A- 2 135 667**

  • **J. RUGE: "Handbuch der Schweißtechnik" 1991 , SPRINLER-VERLAG , HEIDELBERG, DE XP002039427 in der Anmeldung erwähnt Band 1, "Werkstoffe", 3. Auflage, ISBN-3-540-52697-8 siehe Seite 126**

**Beschreibung**

Die Erfindung bezieht sich auf ein Verfahren gemäß dem Oberbegriff des Anspruchs 1. Objekte, bei denen ihre Anwendung möglich und zweckmäßig ist, sind alle durch Strahlschweißverfahren fügbaren, mechanisch, zyklisch oder dynamisch hochbelasteten Bauteile, die wegen einer lokalen Verschleißbelastung zumindest partiell aus härtbaren Stählen bestehen oder die wegen ihrer hohen mechanischen Belastung vergütet sind. Besonders vorteilhaft ist die Erfindung zur Herstellung verschiedenster, insbesondere rotationssymmetrischer Kraftübertragungselemente, druckbeaufschlagter Hohlkörper, Hydraulikkolben, Ventile usw. einsetzbar. Bevorzugtes Einsatzgebiet der Erfindung ist der Fahrzeug- und Maschinenbau, vorrangig der Automobilbau.

Kohlenstoffstähle mit einem Kohlenstoffgehalt von C ≥ 0,25 % und niedriglegierte Stähle mit Kohlenstoffgehalten von C ≥ 0,20 % sind nur bedingt konventionell schweißbar. Die Ursache dafür besteht in der durch den Kohlenstoff bewirkten und durch verschiedene Legierungselemente verstärkten Aufhärtung in der Schweiß- und der Wärmeeinflußzone, die zu Rissen führt. Die Aufhärtung und nachfolgende Rißbildung kommt zustande durch die Bildung von nur wenig verformungsfähigem, nicht oder wenig selbstangelassenen Martensit oder unteren Bainit, die nicht in der Lage sind, die während der Abkühlung auftretenden hohen transienten Spannungen plastisch abzubauen.

Ein Verfahren gemäß dem Oberbegriff des Anspruchs 1 (vgl. mit folgender Literatur-stelle) zur Verhinderung einer unzulässigen Aufhärtung und damit auch der Rißbildung besteht bei konventionellen Schweißverfahren in der durchgreifenden Vorwärmung der Bauteile. Als Vorwärmtemperaturen werden für Kohlenstoffstähle mit Kohlenstoffgehalten C von 0,3 % ≤ C ≤ 0,45 % 150...275 °C empfohlen [z. B.: J. Ruge »Handbuch der Schweißtechnik«, Band 1 »Werkstoffe«, 3. Auflage, Springer-Verlag, Heidelberg 1991, ISBN-3-540-52697-8, S. 125-127, S. 144]. Für niedriglegierte Stähle kann sich die notwendige Vorwärmtemperatur auf Temperaturen bis zu 400 °C erhöhen [z. B. Qualitäts- und Edelstähle der DDR, Leipzig, 1972 Band 1].

Für viele Bauteile, insbesondere Massenbauteile weisen konventionelle Schweißverfahren jedoch Nachteile hinsichtlich Schweißgeschwindigkeit, Bauteilverzug, Stückkosten und Nachbearbeitungsaufwand auf. Die Ursache dieser Mängel besteht in den relativ niedrigen anwendbaren Leistungsdichten, die zu relativ kleinen Erwärmungsgeschwindigkeiten, größerer Wärmeeinbringung und großen Schweißnahtvolumina führen.

Strahlschweißverfahren wie das Laser- oder Elektronenstrahlschweißen vermeiden diese Nachteile durch die Anwendung von bis zu einigen Größenordnungen höheren Leistungsdichten. Ein wesentlicher Mangel dieser Schweißverfahren besteht jedoch darin, daß sie zu einer höheren Aufhärtung der Schmelzzone und der Wärmeeinflußzone und damit auch zu einer höheren Rißanfälligkeit der Schweißnähte führen. Dieser Mangel schränkt die Palette der strahlschweißbaren Stähle empfindlich ein, da die Grenze der rißfrei beherrschbaren Kohlenstoff- und Legierungselementgehalte sinkt

Die Auswirkungen dieses Mangels werden dadurch verstärkt, daß konventionelle Verfahren zur durchgreifenden Vorwärmung nur schlecht in automatisierte Strahlschweißanlagen zu integrieren sind, wegen der kurzen Taktzeiten zu aufwendig sind und durch die Oxidation der Fügestelle zu einer Verschlechterung der Schweißnahtqualität führen.

Die Ursache dieses Mangels besteht in der extrem hohen Abschreckgeschwindigkeit, die die $t_{8/5}$-Zeiten deutlich unterschreitet.

Nach PS J-1-40194 [»Laser Beam Welding method for joining material«] ist ein Verfahren zum Laserschweißen von nicht härtbaren dünnen Blechen bekannt, um die Abschreckgeschwindigkeit beim Laserschweißen durch eine prozeßintegrierte Nachwärmung abzusenken. Dazu wird ein - sich in Bezug zur Vorschubgeschwindigkeit hinter dem Laserschweißkopf befindlicher und mit ihm fest verbundener - Hochfrequenzinduktor mit der Laserschweißgeschwindigkeit in einem durch den Fokusabstand des Laserstrahles und die geometrische Anordnung festgelegten Abstand zur Oberfläche geführt. Durch die Einkopplung der Hochfrequenz wird ein schmaler Streifen beidseitig der I-Schweißnaht des verschweißten Bleches erwärmt und somit die Abschreckgeschwindigkeit verringert. Ziel des Verfahrens ist eine Zähigkeitserhöhung und Verbesserung der Umformbarkeit der Bleche.

Die Bleche werden dazu auf etwa 1 000 °C erwärmt. Durch die Nutzung von Hochfrequenz ist das Verfahren in seiner Anwendung auf dünne Bleche beschränkt. Durch die Veränderung der Vorschubgeschwindigkeit des Induktors, die jedoch nur im gleichen Maße wie die nach anderen Kriterien festzulegende Laserschweißgeschwindigkeit variiert werden kann, der Spitzentemperatur sowie der Induktorlänge und -breite läßt sich die Abkühlgeschwindigkeit in einem relativ engen Rahmen ändern.

Der Mangel dieses Verfahrens besteht darin, daß es nur für dünne Bleche und nur sehr beschränkt für härtbare Stähle und damit kaum für Kraftübertragungselemente oder mechanische Funktionsbauteile einsetzbar ist.

Die Ursache für diesen Mangel besteht darin, daß der überlagerte Temperatur-Zeit-Zyklus der induktiven Nachwärmung nicht oder zumindest nicht für alle Tiefenbereiche innerhalb der Schweißnaht auf die Anforderungen zur Vermeidung der Aufhärtung beim Strahlschweißen von härtbaren Stählen einstellbar ist. Im einzelnen rührt das daher, daß die Erwärmungstiefe nicht an die erforderliche Schweißnahttiefe anpaßbar ist, die Abkühlgeschwindigkeiten nicht oder zumindest nicht für die gesamte Schweißnahttiefe ausreichend klein gewählt werden können und die hohe Spitzentemperatur des Nachwärmzyklus das eingestellte normalisierte oder vergütete Gefüge zerstört. Dadurch, daß die Erwärmungstiefe durch die induktive Energieeinbringung mit Hochfrequenz zu gering ist, die Wärmeenergie erst nach Beendigung des Schweißprozesses eingebracht wird und die Wärmeeindringgeschwindigkeit in das Bauteil vergleichsweise klein gegenüber der Laserschweißgeschwindigkeit ist, erreicht die Grenzisotherme ausreichend hoher Anlaßtemperaturen die tieferen Bereiche der Schweißnaht erst nach Zeitspannen, in denen hier schon die $M_S$-Temperatur unterschritten ist und deshalb Aufhärtung einsetzt. Die hohe Spitzentemperatur von etwa 1000°C, die oberhalb der Austenitisierungstemperatur liegt und die sich aus der bezüglich der Bauteildicke geringen relativen Einwärmtiefe sowie der hohen Vorschubgeschwindigkeit ergebende relativ große Abschreckgeschwindigkeiten führen zudem in Gebieten auch außerhalb der WEZ der Schweißzone zur Gefahr von Neuhärtungen.

Das Ziel der Erfindung ist es, ein Verfahren anzugeben, mit dem sich härtbare Stähle mittels Strahlschweißen effektiv und ohne störende Aufhärtung rißfrei schweißen lassen.

Der Erfindung liegt die Aufgabe zu Grunde, ein instationäres Temperaturfeld und ein Verfahren zu seiner Erzeugung anzugeben, das gut prozeßintegrierbar ist und das auch für härtbare Stähle mit relativ großen kritischen Abkühlzeiten und relativ tiefen Schweißnähten so einstellbar ist, daß die gesamte Schweißnaht eine ausreichend geringe Abkühlgeschwindigkeit aufweist und das normalisierte oder vergütete Grundgefüge des Ausgangszustandes außerhalb der Schweißzone und der Wärmeeinflußzone nicht geschädigt wird.

Erfindungsgemäß wird diese Aufgabe mit einem Verfahren zum rißfreien Strahlschweißen von härtbaren Stählen mittels einer Kurzzeitwärmebehandlung wie im Anspruch 1 dargestellt gelöst.

Vorteilhafte Ausgestaltungen sind in den Ansprüches 2 - 13 dargestellt.

Die Kurzzeitwärmebehandlung wird als alleiniges Vorwärmen durchgeführt. Das wird möglich, wenn die Erwärmungstiefe, die Aufheizdauer, die Spitzentemperatur des Temperatur-Zeit-Zyklus und die Abschreckgeschwindigkeit wie in Anspruch 1 angegeben, gewählt werden. Die Erwärmungstiefe vor Beginn des Strahlschweißens $t_{i2}$ wird dabei so gewählt, daß sie das 1,0 bis 5,0 fache der Schweißnahttiefe erreicht. Als freie Parameter zur Einstellung der Erwärmungstiefe $t_{i2}$ dienen die Energieeinwirkungsdauer selbst, die Induktionsfrequenz und in geringem Maße die Spitzentemperatur $T_{max}$ des Vorwärmzyklus.

Die Spitzentemperatur wird in einem Temperaturbereich von $620\,K < T_{max} \leq T_z$ -30 K gewählt, wobei die Temperatur $T_z$ abhängt vom Ausgangsgefüge der zu verbindenden Werkstoffe. Im perlitischen Zustand entspricht $T_z$ der Temperatur bei der innerhalb einer Zeit von 1 s bis 100 s eine merkliche Zementiteinformung einsetzt. Im vergüteten Ausgangszustand entspricht sie der Temperatur der vorhergehenden Anlaßbehandlung. Die Wahl dieser Temperatur garantiert die besten Bedingungen für den nachfolgenden Abkühlzyklus ohne das Gefüge zu schädigen.

Entscheidend für das Schweißergebnis und besonders vorteilhaft für die Prozeßgestaltung ist es, daß die Abschreckzeit $\tau_k$ durch die Nutzung des natürlichen Abkühlvermögens des Bauteiles eingestellt wird. Als freie Parameter zur Einstellung des konkreten Wertes $\tau_k$ dienen die relative Tiefe und die Breite der Vorwärmzone.

Eine besonders vorteilhafte Ausgestaltung des Verfahrens sieht entsprechend Anspruch 2 vor, daß das Strahlschweißen mit Laser und das Vorwärmen induktiv erfolgt.

Vorteilhaft bei der Verfahrensausgestaltung nach Anspruch 5 ist, daß die Erwärmungstiefe $t_{i1}$ nach Ende des Energieeinwirkungszyklus durch die Frequenz des Induktionsgenerators eingestellt wird. Dadurch kann die Energieeinwirkungsdauer $\tau_S$ und die Abkühlzeit $\tau_A$ verringert werden. Außerdem werden zusätzliche Freiheitsgrade für die Anpassung der Dauer der Energieeinwirkung $\tau_S$ an die Schweißzeit $\tau_L$ entsprechend Anspruch 8 gewonnen, die für eine Taktzeitoptimierung wesentlich ist.

Durch die Wahl der erfindungsgemäßen Energieeinwirkungsdauer $\tau_S$, Maximaltemperaturen $T_{max}$, Abkühlzeiten $\tau_a$ und geometrischen Größen der Vorwärmzone $b_{i1}$ und $t_{i1}$ wird es möglich, den Vorwärmzyklus wie in Anspruch 6 angeführt, vollständig vor dem Schweißzyklus abzuschließen. Das gestattet mehr Freiräume bei der Auslegung von entsprechenden Schweißmaschinenkonzepten.

Eine besondere Ausgestaltung der Erfindung sieht nach Anspruch 9 vor, die Maxima des Temperaturfeldes der Vorwärmung in Entfernungen von dem ein- bis dreifachen der Wandstärke des Bauteiles zu legen. Damit wird bei kritischen Werkstoffen mit besonders großen $t_{8/5}$-Zeiten bei konstanter Maximaltemperatur des Vorwärmzyklus eine besonders kleine Abkühlgeschwindigkeit an der Fügestelle erreicht.

Der Vorteil der Verfahrensgestaltung gemäß Anspruch 10 besteht darin, daß damit ein Austritt der durch die Vorwärmung unter erhöhtem Druck stehenden Luft innerhalb geschlossener Hohlkörper durch den Fügespalt verhindert werden kann. Dadurch kann auch ohne zusätzliche Entlüftungsbohrungen, die oft unerwünscht sind und eines zusätzlichen Fertigungsaufwandes bedürfen, eine sehr gute Schweißnahtqualität erreicht und bis an die Schweißnahtoberfläche reichende Schlauchporen vermieden werden.

Vorteilhaft bei der Verfahrensgestaltung nach Anspruch 11 ist, daß eventuell im Anschluß an die Schweißoperation notwendige Härtungs- oder Vergütungsbehandlungen prozeßtechnisch einfach und energetisch optimal in den Wärmebehandlungszyklus des Schweißens integriert werden können.

Bei der Verfahrensausgestaltung gemäß den Anspüchen 12 und 13 wird vorteilhafterweise von der Tatsache Gebrauch gemacht, daß aus fertigungstechnischen Gründen die zu fügenden Einzelteile einfacher zu härten sind als komplette Schweißkonstruktionen.

Die Erfindung wird am nachfolgenden Ausführungsbeispiel näher erläutert.

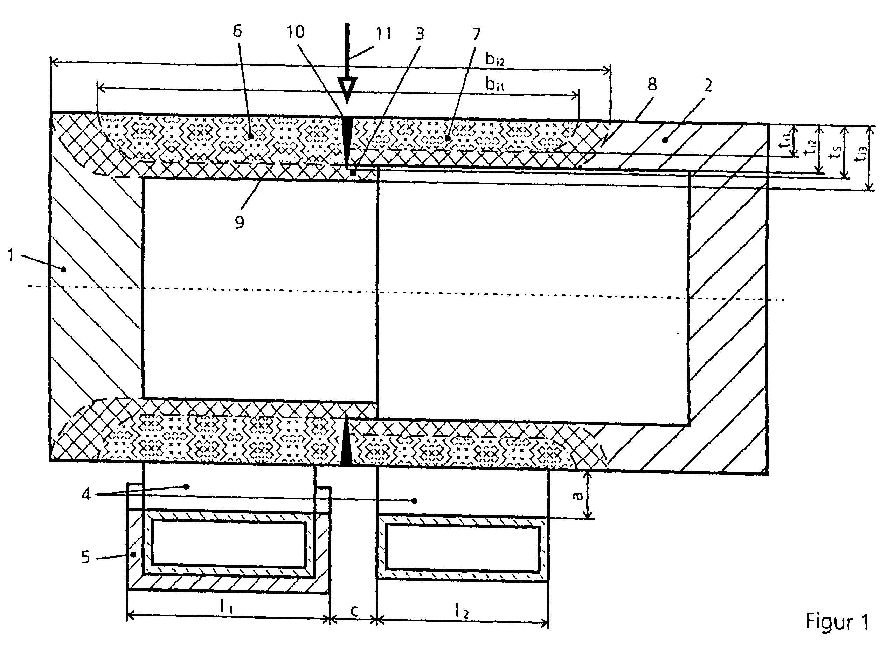

In der dazugehörigen Zeichnung (Figur 1) ist eine schematische Darstellung eines geschweißten Bauteiles dargestellt.

**Beispiel 1:**

Zwei Teile 1 und 2 sollen gemäß Figur 1 mit einer Axialrundnaht verschweißt werden. Der Außendurchmesser beider Teile beträgt 45 mm. Der Innendurchmesser von Teil 2 beträgt 35 mm. Teil 1 ist mit einer Nahtstütze 3 versehen, die 3 mm dick ist. Die Teile werden mit einem Übermaß von 0,05 bis 0,13 mm gefügt. Beide Teile bestehen aus C45 und liegen im normalisierten Zustand vor. Ihre Härte beträgt 225 $HV_{0,05}$.

Als Vorwärmverfahren wird eine induktive Energieeinbringung bewählt. Die Induktionsfrequenz beträgt 10 kHz. Der Induktor 4 ist ein zweiwindiger Halbschaleninduktor. Die Ausführung als Halbschaleninduktor gestattet eine einfache automatisierte Zuführung und Entnahme der gefügten Teile 1 und 2 zur bzw. aus der Erwärmungsstation. Der Induktor 4 trägt auf der dem Teil 1 gegenüberstehenden Windung Feldverstärkungsbleche 5, die trotz der größeren Wandstärke des Teiles 1 eine größere mittlere Temperatur $\overline{T}_1$ innerhalb der induktiven Erwärmungszone 6 als in der induktiven Erwärmungszone 7 mit der mittleren Temperatur $\overline{T}_2$ gewährleisten. Der Kopplungsabstand a beträgt a = 5 mm. Der Induktor ist insgesamt $l_g = l_1 + c + l_2 = 30$ mm breit. Die Wahl der Gesamtbreite $l_g$ = 30 mm erlaubt ausreichend große Abkühlzeiten, während ein gleichfalls erprobter Induktor mit $l_g$ = 16 mm geringere Abkühlzeiten nach sich zieht, die bei gleichen Maximaltemperaturen $T_{max}$ zu einer höheren, aber auch noch tolerierbaren Härte führen. Der Abstand c zwischen beiden Induktorwindungen beträgt 4 mm. Durch die Wahl dieses relativ großen Windungsabstandes gegenüber der Fügestelle wird einer Kantenüberhitzung vorgebeugt. Gleichzeitig bilden sich die beiden Temperaturmaxima des induktiven Vorwärmens in je etwa 7 mm Entfernung von der Fügestelle. In der Abkühlzeit $\tau_A$ zwischen dem Ende der Energieeinwirkungsdauer und dem Start des Schweißens fließt auch zusätzliche Wärme zur Fügestelle, so daß die Temperatur bis zum Start des Schweißens hier besonders langsam abfällt und die nötige Maximaltemperatur $T_{max}$ niedriger gewählt werden kann.

Als Schweißverfahren wird das Laserschweißen gewählt. Zum Schweißen dient ein 5,0 kW-$CO_2$-Laser, die Laserschweißgeschwindigkeit beträgt 1,7 m/min. Der Fokus des Laserstrahles 11 wird 1,0 mm unter die Bauteiloberfläche gelegt.

Nach dem Einspannen der gefügten Teile 1 und 2 werden sie in eine Umdrehungsgeschwindigkeit von 300 U/min versetzt. Der Induktionsgenerator wird auf eine Leistung von 62 kW eingestellt. Nach dem Ende der Energieeinwirkungsdauer von $\tau_S$ = 7,0 s weist das Teil 1 eine Maximaltemperatur $T_{max1}$ von $T_{max1}$ = 655 °C und Teil 2 eine Maximaltemperatur $T_{max2}$ = 610 °C auf. Die Erwärmungstiefe $t_{i1}$ beträgt etwa $t_{i1} \sim 4,5$ mm und die Erwärmungsbreite $b_{i1}$ etwa $b_{i1} \sim 34$ mm. Nach einer Abkühlzeit von $\tau_a$ = 8,0s wird mit dem Laserschweißen begonnen. Die Oberflächentemperaturen betragen zu diesem Zeitpunkt etwa $T_{O1}$ = 590 °C bzw. $T_{O2}$ = 570 °C. Die mittlere Temperatur in Teil 1 ist noch geringfügig höher als in Teil 2. Die Erwärmungszone hat sich auf die Größen $t_{i2}$ = 5,0 mm, $t_{i3}$ = 8,0 mm, $b_{i2}$ = 42 mm ausgedehnt. Der Temperaturunterschied zwischen dem Außendurchmesser 8 und dem Innendurchmesser 9 ist sehr gering und beträgt maximal 20 K.

Geschweißt wird mit einer Laserleistung von 4,0 kW. Einschließlich des Schweißens des Überlappungsbereiches dauert das Laserschweißen $\tau_L$ = 5,4 s. Die Einschweißtiefe der Laserschweißnaht 10 erreicht etwa 6,0 mm, die Zeit $t_{8/5} \geq t_k$ in der Schweißzone und der Wärmeeinflußzone beträgt etwa 19 s und ist damit deutlich größer als die kritische Abkühlzeit zur Martensitbildung, die für C45 bei etwa 2 s liegt.

Die Laserschweißnaht 10 weist eine mittlere Härte von 280 $HV_{0,05}$ auf, ist völlig rißfrei und besteht fast völlig aus Ferrit und Perlit. Wird dagegen ohne Vorwärmen geschweißt, beträgt die mittlere Härte in der Schweißzone 665 $HV_{0,05}$. Sowohl Schweißzone als auch die innere Berandung der Wärmeeinflußzone sind voll martensitisch und weisen im Mittel 9 Risse auf.

**Patentansprüche**

1. Verfahren zum rissfreien Strahlschweißen von härtbaren Stählen mittels Kurzzeitwärmebehandlung, **dadurch gekennzeichnet, dass**

   a. die Kurzzeitwärmebehandlung als alleiniges Vorwärmen durchgeführt wird

   b. die Erwärmungstiefe ($t_{i1}$) nach Ende einer Energieeinwirkungsdauer $\tau_s$ so gewählt wird, dass sie das 0,3- bis 5-fache der Schweißnahttiefe ($t_s$) erreicht

   c. der Temperatur-Zeit-Zyklus des Vorwärmens so geführt wird, dass am Ende einer Energieeinwirkungsdauer $\tau_s$ von 0,3 s $\leq \tau_s \leq$ 20 s eine Spitzentemperatur $T_{max}$ von 620 K $\leq T_{max} \leq T_z$ -30 K erreicht wird, wobei im vergüteten Ausgangszustand die Temperatur $T_z$ der Temperatur der vorhergehenden Anlassbehandlung entspricht und im ferritisch-perlitischen Ausgangszustand die Temperatur $T_z$ der Temperatur entspricht, bei der bei dem betreffenden Stahl die Zementiteinformung innerhalb von 1 s bis 100 s merklich einsetzt

d. das Strahlschweißen spätestens nach einer Abkühlzeit $\tau_A$ von $0,01\,s \leq \tau_A \leq 30\,s$ beginnt und die Einwärmtiefe ($t_{i2}$) zu diesem Zeitpunkt eine Tiefe $1,0\,t_s \leq t_{i2} \leq 5\,t_s$ erreicht hat

e. die Abschreckzeit in der Schweißzone und der Wärmeeinflußzone $t_{8/5}$ auf einen Wert $t_{8/5} \geq \tau_K$ eingestellt wird, wobei der Wert $\tau_K$ einer Abschreckzeit entspricht, bei der der Anteil von Ferrit, Perlit und Zwischenstufe in der Schweiß- und Wärmeeinflußzone mindestens 70 % beträgt oder die Härte in der Schweiß- und Wärmeeinflußzone kleiner als 350 $HV_{0,05}$ ist

f. zur Einstellung des Wertes $\tau_K$ die Breite ($b_{i1}$) der Vorwärmzone und ihre relative Tiefe $t_{i1}/d$ in Bezug zur Wandstärke d des Bauteiles soweit vergrößert werden, bis die Abkühlung so langsam verläuft, daß der Wert $\tau_K$ erreicht oder überschritten wird

2. Verfahren nach Anspruch 1, **dadurch gekennzeichnet, dass** das Strahlschweißen mittels Laser vorgenommen wird und das Vorwärmen induktiv erfolgt.

3. Verfahren nach Anspruch 1, **dadurch gekennzeichnet, dass** das Strahlschweißen mittels Elektronenstrahl vorgenommen wird und das Vorwärmen induktiv oder direkt durch den Elektronenstrahl selbst erfolgt.

4. Verfahren nach Anspruch 1, **dadurch gekennzeichnet, dass** das Strahlschweißen mittels Laser vorgenommen wird und das Vorwärmen mittels eines oder mehrerer geeignet angeordneter Hochleistungsdiodenlaserstacks erfolgt.

5. Verfahren nach Anspruch 1 und 2 oder 3, **dadurch gekennzeichnet, dass** die Erwärmungstiefe ($t_{i1}$) nach Ende des Energieeinwirkungszyklus durch die Frequenz des Induktorgenerators eingestellt wird.

6. Verfahren nach Anspruch 1, **dadurch gekennzeichnet, dass** das Vorwärmen vollständig vor Beginn des Strahlschweißens abgeschlossen ist.

7. Verfahren nach Anspruch 1, **dadurch gekennzeichnet, dass** das Vorwärmen simultan im Vorlauf der Schweißzone und mit gleicher Vorschubgeschwindigkeit erfolgt.

8. Verfahren nach Anspruch 1 und 6, **dadurch gekennzeichnet, dass** die Energieeinwirkungsdauer $\tau_s$ etwa gleichlang wie die Schweißzeit $\tau_L$ eingestellt wird.

9. Verfahren nach Anspruch 1 und 6, **dadurch gekennzeichnet, dass** das Temperaturfeld des Vorwärmzyklus so ausgebildet wird, dass die Temperaturmaxima des Vorwärmzyklus etwa in einer Entfernung von dem 1- bis 3-fachen der Bauteilwandstärke d entstehen.

10. Verfahren nach Anspruch 1, **dadurch gekennzeichnet, dass** beim Verschweißen von geschlossenen Hohlkörpern die Fügestelle (10) mit einer Nahtstütze (3) ausgeführt wird, die beiden zu verschweißenden Teile (1) und (2) mit einer Presspassung ausgeführt werden und die Presspassung während des Vorwärmens und bis zum Ende des Schweißvorganges dadurch aufrechterhalten wird, dass die mittlere Temperatur $T_1$ in dem mit einer Nahtstütze (3) versehenen Teiles (1) während des Vorwärmens und des Schweißens ständig größer gehalten wird als die im Teil (2) sich ausbildende mittlere Temperatur $T_2$.

11. Verfahren nach Anspruch 1, **dadurch gekennzeichnet, dass** unmittelbar im Anschluss an das Strahlschweißen die miteinander verschweißten Teile oder Bereiche von ihnen einer durchgreifenden oder Randschichtvergütung unterworfen werden.

12. Verfahren nach Anspruch 1, **dadurch gekennzeichnet, dass** auf einem oder beiden zu verschweißenden Bauteilen vor dem Vorwärmen durchgehärtete, randschichtgehärtete oder einsatzgehärtete Bereiche erzeugt werden und ihr Anlassen unmittelbar nach dem Schweißen mit der Restwärme des Vorwärmens erfolgt.

13. Verfahren nach Anspruch 1 und 12, **dadurch gekennzeichnet, dass** bei verschleißbeanspruchten Bauteilen die Anlaßtemperatur durch eine lokale Flüssigkeits- oder Gaskühlung eingestellt wird.

**Claims**

1. Method for crack-free beam welding of hardenable steels by means of short-time heat treatment, **characterized in that**

   a. the short-time heat treatment is carried out as the only preheating step,

   b. the heating depth ($t_{i1}$) after the end of a duration of energy action $\tau_s$ is selected in such a way as to reach 0.3 to 5 times the weld seam depth ($t_s$),

   c. the temperature-time cycle of the preheating is such that, at the end of a duration of energy action $\tau_s$ of $0.3\,s \leq \tau_s \leq 20\,s$, a peak temperature $T_{max}$ of $620\,K \leq T_{max} \leq T_z - 30\,K$ is reached, and in the quenched and tempered starting state the temperature $T_z$ corresponds to the temperature of the preceding tempering treatment and in the ferritic-pearlitic starting state the temperature $T_z$ corresponds to the temperature at which, in the steel in question, cementite spheroidization commences to a significant degree within 1 s to 100 s,

d. the beam welding commences at the latest after a cooling time $\tau_A$ of 0.01 s $\leq \tau_A \leq$ 30 s, and the heat penetration depth ($t_{i2}$) at this time has reached a depth of 1.0 $t_s \leq t_{i2} \leq$ 5 $t_s$,

e. the quenching time in the welding zone and the heat-affected zone $t_{8/5}$ is set to a value $t_{8/5} \geq \tau_K$, the value $\tau_K$ corresponding to a quenching time at which the proportion of ferrite, pearlite and bainite in the welding zone and heat-affected zone amounts to at least 70% or the hardness in the welding and heat-affected zone is less than 350 $HV_{0.05}$,

f. to set the value $\tau_K$, the width ($b_{i1}$) of the preheating zone and its relative depth $T_{i1}/d$ in relation to the wall thickness d of the component are increased until the cooling takes place so slowly that the value $\tau_k$ is reached or exceeded.

2. Method according to Claim 1, **characterized in that** the beam welding is carried out by means of laser and the preheating takes place by induction.

3. Method according to Claim 1, **characterized in that** the beam welding is carried out by means of electron beam and the preheating takes place by induction or directly by means of the electron beam itself.

4. Method according to Claim 1, **characterized in that** the beam welding is carried out by means of laser and the preheating takes place by means of one or more suitably arranged high-power diode laser stacks.

5. Method according to Claim 1 and 2 or 3, **characterized in that** the heating depth ($t_{i1}$) after the cycle of energy action has ended is set by means of the frequency of the inductor generator.

6. Method according to Claim 1, **characterized in that** the preheating has completely concluded before the beam welding commences.

7. Method according to Claim 1, **characterized in that** the preheating takes place simultaneously ahead of the welding zone and at the same rate of advance.

8. Method according to Claims 1 and 6, **characterized in that** the duration of energy action $\tau_s$ is set to last approximately the same time as the welding time $\tau_L$.

9. Method according to Claims 1 and 6, **characterized**

**in that** the temperature field of the preheating cycle is formed in such a way that the temperature maximums of the preheating cycle occur approximately at an interval of 1 to 3 times the component wall thickness d.

10. Method according to Claim 1, **characterized in that**, to weld closed hollow bodies, the joining location (10) is designed with a seam support (3), the two parts (1) and (2) which are to be welded are designed with a press fit and the press fit is maintained during the preheating and through to the end of the welding operation by the mean temperature $T_1$ in the part (1) which is provided with a seam support (3) being kept higher than the mean temperature $T_2$ which forms in the part (2) throughout the preheating and the welding.

11. Method according to Claim 1, **characterized in that**, immediately after the beam welding, those parts or regions thereof which have been welded to one another are subjected to continuous or surface quenching and tempering.

12. Method according to Claim 1, **characterized in that**, prior to the preheating, fully hardened, surface-hardened or case-hardened regions are produced on one or both of the components to be welded, and these components are tempered immediately after the welding using the residual heat of the preheating.

13. Method according to Claims 1 and 12, **characterized in that**, in the case of components which are subject to wear, the tempering temperature is set by means of local liquid or gas cooling.

**Revendications**

1. Procédé pour le soudage au faisceau, sans fissures, d'aciers trempants par traitement thermique de courte durée,
**caractérisé en ce que**

a) le traitement thermique de courte durée est uniquement un préchauffage,
b) la profondeur de chauffage ($t_{i1}$) à la fin d'une durée d'action de l'énergie $\tau_s$ est choisie de façon à atteindre 0,3 à 5 fois la profondeur du cordon de soudure ($t_s$),
c) le cycle température-temps du préchauffage est conduit de telle façon qu'à la fin d'une durée d'action de l'énergie $\tau_s$ de 0,3 s $\leq \tau_s \leq$ 20 s, on atteigne un pic de température $T_{max}$ de 620 K $\leq T_{max} \leq T_z$ - 30 K, dans lequel, à l'état initial traité et revenu, la température $T_z$ correspond à la température du traitement de revenu préalable et, à l'état initial ferritique-perlitique, la température $T_z$ correspond à la température, à laquelle la formation de cémentite se produit de façon perceptible dans une plage de 1 s à 100 s pour l'acier considéré,

d) le soudage au faisceau commence au plus tard après un temps de refroidissement $\tau_A$ de $0,01\ s \leq \tau_A \leq 30\ s$ et la profondeur de chauffage ($t_{i2}$) à cet instant a atteint une profondeur $1,0\ t_s \leq t_{i2} \leq 5\ t_s$,

e) la durée de trempe dans la zone de soudage et dans la zone influencée thermiquement $t_{8/5}$ est réglée à une valeur $t_{8/5} \geq \tau_K$, dans lequel la valeur $\tau_K$ correspond à une durée de trempe, pour laquelle la fraction de ferrite, de perlite et de structure intermédiaire dans la zone de soudage et la zone influencée thermiquement vaut au moins 70 % ou la dureté dans la zone de soudage et la zone influencée thermiquement est inférieure à 350 $HV_{0,05}$,

f) pour le réglage de la valeur $\tau_K$, la largeur ($b_{i1}$) de la zone de préchauffage et sa profondeur relative $t_{i1}/d$ par rapport à l'épaisseur de paroi d de la pièce sont augmentées jusqu'à ce que le refroidissement se déroule suffisamment lentement pour que la valeur $\tau_K$ soit atteinte ou dépassée.

2. Procédé selon la revendication 1,
**caractérisé en ce que**
le soudage au faisceau est effectué au moyen d'un laser et le préchauffage est effectué par induction.

3. Procédé selon la revendication 1,
**caractérisé en ce que**
le soudage au faisceau est effectué au moyen d'un faisceau d'électrons et le préchauffage est effectué par induction ou directement par le faisceau d'électrons lui-même.

4. Procédé selon la revendication 1,
**caractérisé en ce que**
le soudage au faisceau est effectué au moyen d'un laser et le préchauffage est effectué au moyen d'une ou de plusieurs piles de laser à diodes à haute puissance disposées de façon appropriée.

5. Procédé selon la revendication 1 et 2 ou 3,
**caractérisé en ce que**
la profondeur de chauffage ($t_{i1}$) à la fin du cycle d'action de l'énergie est réglée par la fréquence du générateur d'induction.

6. Procédé selon la revendication 1,
**caractérisé en ce que**
le préchauffage est complètement terminé avant le début du soudage au faisceau.

7. Procédé selon la revendication 1,
**caractérisé en ce que**
le préchauffage est effectué simultanément en avant de la zone de soudage et avec la même vitesse d'avance.

8. Procédé selon la revendication 1 et 6,
**caractérisé en ce que**
la durée d'action de l'énergie $\tau_s$ est réglée à une valeur sensiblement égale à la durée de soudage $\tau_L$.

9. Procédé selon la revendication 1 et 6,
**caractérisé en ce que**
le champ de température du cycle de préchauffage est configuré de telle façon que les maxima de température du cycle de préchauffage apparaissent environ à une distance égale à 1 à 3 fois l'épaisseur de paroi de la pièce.

10. Procédé selon la revendication 1,
**caractérisé en ce que**
lors du soudage de corps creux fermés, le joint (10) est formé avec un soutien de cordon (3), les deux pièces à souder (1) et (2) sont réalisées avec un ajustage serré et l'ajustage serré est maintenu pendant le préchauffage et jusqu'à la fin de l'opération de soudage, par le fait que la température moyenne $T_1$ dans la pièce (1) pourvue d'un soutien de cordon (3) est constamment maintenue plus haute que la température moyenne $T_2$ s'établissant dans la pièce (2) pendant le préchauffage et le soudage.

11. Procédé selon la revendication 1,
**caractérisé en ce que**
immédiatement à la suite du soudage au faisceau, les pièces ou les régions de celles-ci soudées l'une à l'autre sont soumises à un traitement thermique à coeur ou dans la couche superficielle.

12. Procédé selon la revendication 1,
**caractérisé en ce que**
l'on produit sur une ou sur les deux pièces à souder, avant le préchauffage, des régions trempées à coeur, trempées en surface ou cémentées et **en ce que** l'on effectue leur revenu immédiatement après le soudage avec la chaleur résiduelle du préchauffage.

13. Procédé selon la revendication 1 et 12,
**caractérisé en ce que**
dans le cas de pièces soumises à l'usure, la température de revenu est fixée par un refroidissement local par un liquide ou un gaz.

Figur 1